# EUROPÄISCHE PATENTANMELDUNG

(11) **EP 2 392 844 A1**
(43) Veröffentlichungstag der Anmeldung: **07.12.2011**
(21) Anmeldenummer: 10405112.3
(22) Anmeldetag: 01.06.2010
(51) Int. Cl.: F16K 31/385

(54) **Servogesteuertes Ventil, Verwendung eines solchen Ventils und Spülvorrichtung mit einem solchen Ventil**

(71) Anmelder: Geberit International AG, 8645 Jona (CH)
(72) Erfinder: Urs Inglin, 8853 Lachen (CH)
(74) Vertreter: Groner, Manfred

(57) **Zusammenfassung**

Das servogesteuerte Ventil weist zwischen einem Einlass (7) und einem Auslass (8) einen Hauptventilsitz (9) auf, der durch ein erstes Schliessteil (14) verschliessbar ist, das mit einer dem Hauptventilsitz (9) abgewendeten Seite eine Wand einer Steuerkammer (15) bildet. Ein Pilotventil (28, 44) weist in einer Pilotventilkammer (30) einen Hilfsventilsitz (44) auf, der mit einem zweiten Schliessteil (28) verschliessbar ist. Das zweite Schliessteil (28) ist vom Hilfsventilsitz (44) abhebbar, so dass Steuerwasser aus der Steuerkammer (15) und der Pilotventilkammer (30) durch einen Durchgang (24, 51) ausfliessen kann und der Druck in der Steuerkammer (15) sinkt und sich das erste Schliessteil (14) vom Hauptventilsitz (9) abhebt. Der Durchgang (24, 51) ist so ausgebildet, dass bei geöffnetem Pilotventil (28, 44) das Steuerwasser im Wesentlichen widerstandslos ausfliessen kann.

## Beschreibung

Die Erfindung betrifft ein servogesteuertes Ventil nach dem Oberbegriff des Anspruchs 1. Die Erfindung betrifft zudem eine bevorzugte Verwendung eines solchen Ventils sowie eine Spülvorrichtung mit einem solchen Ventil.

Solche servogesteuerte Ventile sind insbesondere in der Sanitärtechnik seit langem bekannt. Sie werden beispielsweise als Spülventile für Urinale verwendet. Das Ventil kann beispielsweise pneumatisch mit einem Druckimpuls oder auch elektrisch angesteuert werden. Das Pilotventil wird nicht direkt, sondern durch die Bewegung eines Permanentmagneten angesteuert. Diese indirekte Betätigung des Pilotventils ermöglicht eine vergleichsweise hohe Präzision beim Öffnen und Schliessen des Ventils. Ein solches Ventil ist im Stand der Technik durch die DE 24 35 256 bekannt geworden. Ein weiteres servogesteuertes Ventil, bei dem jedoch das zweite Schliessteil direkt pneumatisch betätigbar wird, ist aus der EP-A-0 811 795 bekannt geworden. Ein weiteres Ventil dieser Art ist aus der EP-A-2 169 288 des Anmelders bekannt geworden.

Zum Spülen von WC-Schüsseln werden seit langem sogenannte Jet-Düsen verwendet, mit denen ein Wasserstrahl mit vergleichsweise hohem Druck abgegeben werden kann. Der Druck wird hierbei in einer Pumpe erzeugt, welche einem servogesteuerten Ventil vorgeschaltet ist. Für die Wirkung und insbesondere die Reinigungswirkung eines solchen Wasserstrahls ist die Wirkungsweise dieses Ventils wesentlich.

Der Erfindung liegt die Aufgabe zugrunde, ein Ventil der genannten Art zu schaffen, das sich insbesondere zum Erzeugen eines Wasserstrahls noch besser eignet.

Die Aufgabe ist gemäss Anspruch 1 gelöst. Messungen haben gezeigt, dass beim erfindungsgemässen Ventil der Schliessteil des Hauptventilsitzes schneller vom Ventilsitz abgehoben wird und das Ventil wesentlich schneller öffnet. Ein Reinigungsstrahl kann zum Spülen somit mit kleiner Verzögerung abgegeben werden. Ohne den Reinigungsvorgang zu verlängern, kann gründlicher gereinigt werden. Alternativ ist eine kürzere Reinigungszeit bei gleicher Reinigungswirkung möglich. Das erfindungsgemässe Ventil eignet sich besonders für eine Spülwassersteuerung gemäss der europäischen Patentanmeldung Nr. 09 405 215 vom 9. Dezember 2009. Das Steuerwasser kann nach dem Öffnen des Pilotventils im Wesentlichen widerstandslos ausfliessen, so dass das Hauptventil mit geringerem Gegendruck vom Ventilsitz abheben kann.

Gemäss einer Weiterbildung der Erfindung ist der Durchgang für die Abgabe des Steuerwassers zur Umgebungsatmosphäre hin offen. Das Steuerwasser kann somit im Wesentlichen ohne Widerstand ausfliessen, so dass das Steuerwasser eine Membran des Hauptventils und auch das Pilotventil weniger belastet. Ein solcher Ausgang kann mit sehr kleinem konstruktivem Aufwand und somit kostengünstig realisiert werden. Das Steuerwasser wird gemäss einer Weiterbildung der Erfindung in einen Spülkasten abgegeben. Das Steuerwasser kann dann somit wieder für eine Spülung verwendet werden.

Nach einer Weiterbildung der Erfindung wird das Steuerwasser wie bisher in den Auslass abgegeben. Der Widerstand bei der Abgabe des Steuerwassers in den Auslass wird durch eine Verengung im Auslassrohr wesentlich vermindert, so dass auch hier das Hauptventil beim Öffnen weniger belastet ist.

Das erfindungsgemässe Ventil eignet sich besonders für eine Spülvorrichtung gemäss der europäischen Patentanmeldung Nr. 09 405 215.6 vom 9. Dezember 2009 des Anmelders. Bei dieser wird die Spülwassermenge aufgeteilt, so dass hier ein schnelles und präzises Öffnen des Ventils bzw. der Ventile besonders vorteilhaft ist.

Ausführungsbeispiele der Erfindung werden nachfolgend anhand der Zeichnung näher erläutert. Es zeigen:
- Fig. 1: ein Schnitt durch ein erfindungsgemässes Ventil, wobei dieses geschlossen ist,
- Fig. 2: ein Schnitt durch ein erfindungsgemässes Ventil nach einer Variante, wobei dieses geöffnet ist,
- Fig. 3a, 3b, 4a und 4b: Ablaufdiagramme des erfindungsgemässen Ventils.

Das Ventil 1 besitzt ein Gehäuse 2, das einen ersten Gehäuseteil 3, einen zweiten Gehäuseteil 4, einen dritten Gehäuseteil 5 und einen vierten Gehäuseteil 6 aufweist. Diese Gehäuseteile sind mit hier nicht gezeigten Befestigungsmitteln, beispielsweise Schrauben oder Rastelementen miteinander verbunden. Der erste Gehäuseteil 3 besitzt einen Einlass 7, der durch einen Stutzen 42 gebildet ist, der an eine hier nicht gezeigte Druckwasserleitung anschliessbar ist. Am ersten Gehäuseteil 3 ist zudem ein Rohrteil 43 angeformt, der einen Auslass 8 besitzt und der beispielsweise an eine hier nicht gezeigte Spülleitung eines Urinals anschliessbar ist. Bei geöffnetem Ventil strömt das Wasser in Richtung des Pfeils 16 durch diesen Rohrteil 43. Am dritten Gehäuseteil 5 ist ein Anschlussstutzen 37 angeformt, an dem das Ventil 1 mit einer hier nicht gezeigten vorzugsweise pneumatischen Betätigungsvorrichtung verbindbar ist. Die Betätigungsvorrichtung kann beispielsweise als eine Fuss- oder Handbetätigung vorgesehen sein und eine Taste aufweisen, mit der ein Luftimpuls ausgeübt werden kann. Grundsätzlich ist aber auch eine andere Betätigung, beispielsweise eine mechanische Betätigung möglich.

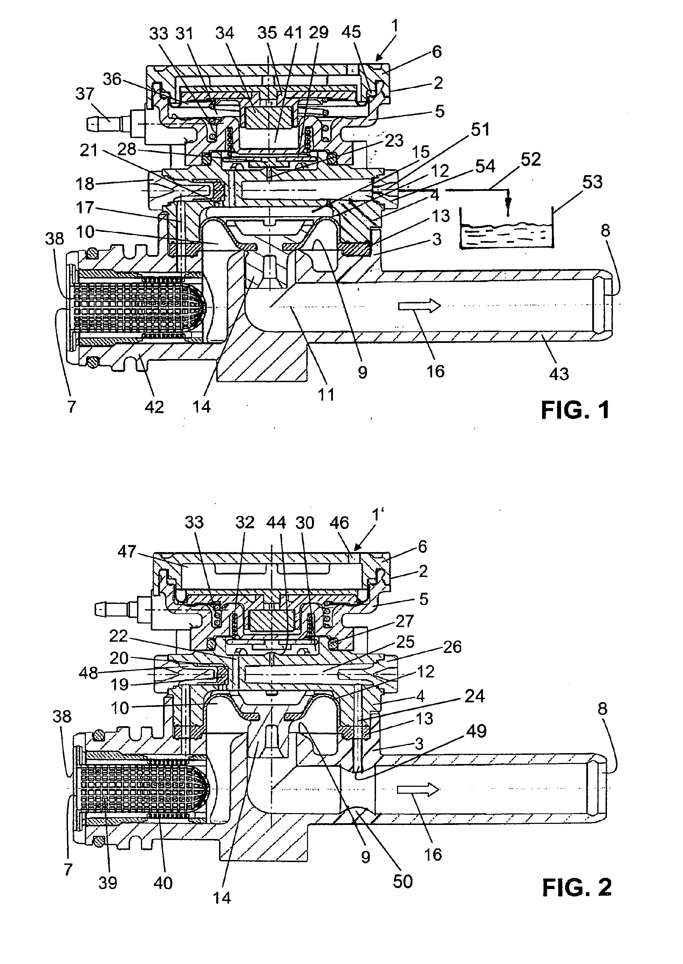

In den Stutzen 42 ist ein Filter 38 eingesetzt, der aus einem Grobfilter 39 und einem Feinfilter 40 besteht. Der Feinfilter 40 ist hülsenförmig ausgebildet und umgibt den Grobfilter 39. Nach dem Filter 38 ist eine Einströmkammer 10 angeordnet, die bei geöffnetem Ventil gemäss Figur 2 mit einem Durchlass 11 des Rohrteils 43 verbunden ist. Bei geöffnetem Ventil strömt Wasser aus der genannten Druckwasserleitung vom Einlass 7 durch den Grobfilter 39 in die Einströmkammer 10 und schliesslich zum Auslass 11. In der Einströmkammer 10 befindet sich ein Ventilsitz 9, der in Figur 1 mit einem Schliessteil 14 verschlossen ist. Dieser Schliessteil 14 besitzt eine Membran 12, die insbesondere als Rollmembran ausgebildet ist und einen Ringwulst 13 besitzt, der ringförmig ausgebildet ist und welcher den ersten Gehäuseteil 3 gegenüber dem zweiten Gehäuseteil 4 abdichtet. Der Verschlusskörper 14 bildet mit dem zweiten Gehäuseteil 4 eine Steuerkammer 15. Die Steuerkammer 15 ist über einen Wasserkanal 17 mit dem Einlass 7 verbunden. Die Steuerkammer 15 ist einerseits über einen Durchgang 22 im zweiten Gehäuseteil 4 mit einer Pilotventilkammer 30 und über einen Wasserkanal 17 mit dem Einlass 7 verbunden.

In der Pilotventilkammer 30 ist ein zweites Schliessteil 28 angeordnet, das mit einem Hilfsventilsitz 44 zusammenarbeitet. Bei geöffnetem Pilotventil ist die Pilotventilkammer 30 über eine Pilotöffnung 23 und eine Ausnehmung 25 mit einem Durchgang 51 verbunden, der über ein Verbindungsteil 54 mit einer Leitung 52 verbunden ist, die in einen hier lediglich angedeuteten Spülkasten 53 führt. Der Durchgang 51 kann auch einen grösseren Durchmesser aufweisen als in Fig. 1 gezeigt ist, so dass der Durchströmwiderstand noch kleiner wird. Beim Öffnen des Ventils 1 wird das Steuerwasser somit in den Spülkasten 53 abgeführt. Die Leitung 52 ist somit zur Umgebungsatmosphäre hin offen, so dass das Steuerwasser mit vergleichsweise geringem Widerstand ausfliesst. Das in den Spülkasten 53 abgegebene Steuerwasser wird bei der nächsten Spülung für einen Spülvorgang abgegeben. Das zweite Schliessteil 28 besitzt einen scheibenförmigen magnetischen Anker 29, der mittels einer Druckfeder 32 gegen den Ventilsitz 44 gespannt ist. Über dem Anker 29 ist eine Magnetkammer 31 angeordnet, die mittig eine Vertiefung 41 besitzt, in welche ein Permanentmagnet 34 eintauchen kann. Das Eintauchen erfolgt gegen die rückwirkende Kraft eines Federelementes 33. Der Permanentmagnet 34 ist an der Unterseite eines Halters 35 befestigt, der an einer Membran 36 angeordnet ist, die eine Rollmembran bildet und die mit einem Wulst 45 den dritten Gehäuseteil 5 gegenüber einem vierten Gehäuseteil 6 abdichtet.

Das in Fig. 2 gezeigte Ventil 1' unterscheidet sich vom oben beschriebenen Ventil 1 durch einen Durchgang 24, der durch den zweiten Gehäuseteil 4 hindurchführt und in den Durchlass 11 des Rohrteils 43 und somit in den Auslass 8 mündet. Damit das Steuerwasser mit kleinerem Widerstand an einer Auslassöffnung 49 austreten kann, besitzt der Rohrteil 43 eine Verengung 50, wie dies beispielsweise bei einem Venturirohr in Anwendung der Bernoullischen Gleichung vorgesehen ist. Die Verengung hat die Wirkung, dass der statische Druck im Durchgang 24 bei strömendem Wasser im Rohrteil 43 vermindert wird und das Steuerwasser somit kurz nach dem Abheben des Schliessteils 14 schneller als bisher aus der Steuerkammer 15 abfliesst.

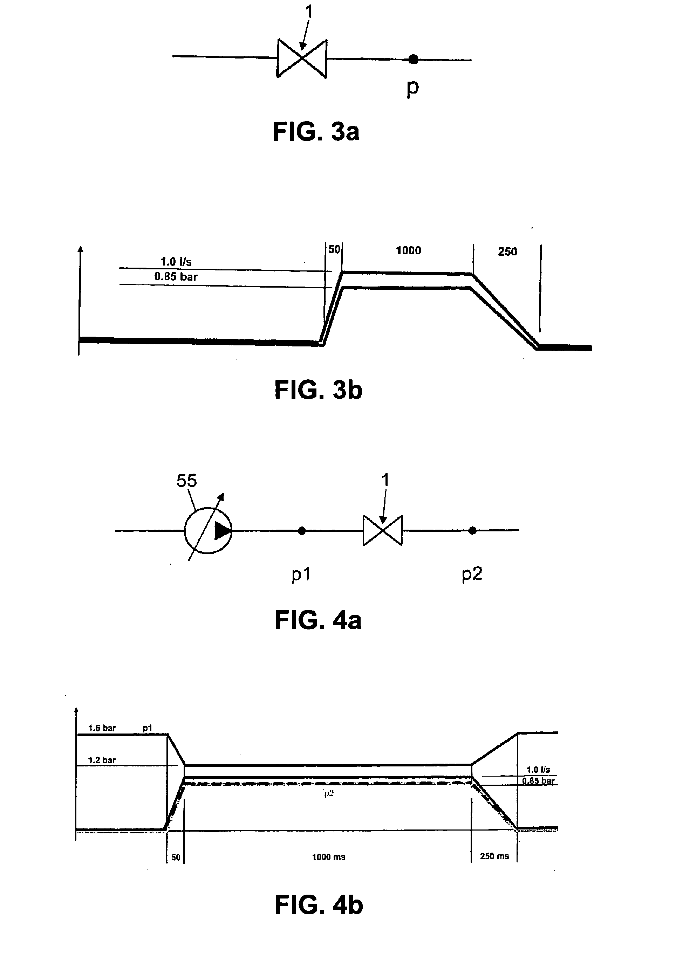

Wie die Schemata und Ablaufdiagramme der Fig. 3a, 3b, 4a und 4b zeigen, beträgt gemäss einer Messung die Öffnungszeit 50 ms und die Schliesszeit 250 ms. Der Druck bei geöffnetem Ventil betrug im Auslass 8 0.85 bar. Bei geöffnetem Ventil betrug der Durchfluss 1 1/s. Vor dem Ventil sank gemäss Fig. 4b der Druck im Einlass 7 von 1,6 bar auf 1,2 bar. In dieser Figur ist der Druck im Auslass 8 mit einer gestrichelten Linie eingezeichnet. Bei der Anordnung nach Fig. 4a wird das Wasser mit einer Pumpe 55 dem Ventil 1 bzw. 1' zugeführt. Der Druck p1 wurde vor dem Ventil 1 bzw. 1' und der Druck p2 nach dem Ventil gemessen.

Nachfolgend wird die Funktionsweise der Ventile 1 und 1' näher erläutert. Um das Ventil 1 bzw. 1' zu öffnen, wird die genannte Betätigungsvorrichtung beispielsweise durch Drücken einer Taste betätigt. Hierbei wird in der Magnetkammer 31 pulsartig ein Unterdruck erzeugt. Durch diesen bewegt sich der Permanentmagnet 34 nach unten in die Vertiefung 41 und nähert sich dadurch dem Anker 29. Aufgrund der dadurch auf den Anker 29 ausgeübten magnetischen Kraft wird dieser in der Figur 1 gegen den Druck der Feder 32 nach oben bewegt. Damit wird das zweite Schliessteil 28 vom Ventilsitz 44 abgehoben. Die Pilotöffnung 23 ist damit frei. Wasser strömt nun aus der Steuerkammer 15 durch den Durchgang 22 in die Pilotventilkammer 30 und von dieser durch die Pilotöffnung 23 und die Ausnehmung 25 in den Durchgang 51 bzw. 24. Vom Durchgang 51 gelangt das Steuerwasser über die Leitung in die Umgebungsatmosphäre, beispielsweise in den Spülkasten 53. Beim Ventil 1' gelangt das Steuerwasser durch den Durchgang 24 in den Auslass 8. Dies hat zur Folge, dass der Druck in der Steuerkammer 15 sofort und wesentlich kleiner wird. Aufgrund des weiterhin bestehenden Wasserdruckes in der Einströmkammer 10 wird das Schliessteil 14 nach oben und damit weg vom Ventilsitz 9 bewegt. Schliesslich wird der zweite Gehäuseteil 4 gemäss Figur 2 von diesem Schliessteil 14 beaufschlagt. Bei der genannten Bewegung des Permanentmagneten 34 strömt über eine Öffnung 46 des vierten Gehäuseteils 6 Luft in eine Kammer 47, die sich über einem Halter 35 bzw. der Membran 36 befindet. In dieser Öffnung 46 kann eine hier nicht gezeigte Düse mit einem definierten Durchlasskanal eingesetzt sein welche die Schliesszeit bestimmt. Durch die Kraft der Feder wird der Halter 35 nach oben gespannt und dadurch strömt Luft der Kammer 47 durch die Öffnung und die nachgeschaltete Düse nach aussen. Der Permanentmagnet 34 wandert dadurch nach oben und damit vom Anker 29 weg. Entsprechend wird die magnetische Kraft des Permanentmagneten 34 auf den Anker stetig kleiner. Unterschreitet diese Kraft eine bestimmte Grösse, so bewegt die Feder 32 das zweite Schliessteil 28 nach unten bis die Pilotöffnung 23 verschlossen ist.

Die Pilotöffnung 23 ist nun verschlossen. Da die Steuerkammer 15 weiterhin über den Wasserkanal 17 mit dem Einlass 7 und damit mit der Druckwasserleitung verbunden ist, erhöht sich der Wasserdruck in der Steuerkammer 15. Das Schliessteil 14 wird nun aufgrund dieses Wasserdruckes in die in Figur 1 gezeigte Stellung bewegt, in welcher nun der Ventilsitz 9 verschlossen ist. Da die beaufschlagte Fläche an der Oberseite des Schliessteils 14 grösser ist als auf der Unterseite, wirkt auf das Schliessteil 14 eine Kraft, welcher dieses in der Schliessposition hält.

Bei der Bewegung des Schliessteils 14 in die Schliessstellung strömt durch den Wasserkanal 17 Wasser in die Steuerkammer 15. Der Druck ist hierbei mit einem Druckregulierstopfen 18 oder einer anderen geeigneten Regulierorgan geregelt. Der Druckregulierstopfen 18 ist wie ersichtlich in eine Bohrung 48 des zweiten Gehäuseteils 4 eingesetzt, beispielsweise eingeschraubt. In die Bohrung 48 ist ein Einsatz 19 eingesetzt, der am Umfang einen Durchgang 20 aufweist, welcher die Bohrung 48 mit einer Bohrung 21 verbindet, welche in die Steuerkammer 15 mündet. Der Druckregulierstopfen 18 ist auswechselbar.

Das in den Wasserkanal 17 einströmende Wasser ist vom Grobfilter 39 als auch vom Feinfilter 40 gefiltert, so dass keine festen Bestandteile über einer bestimmten Grösse durch den Wasserkanal 17 ins Gehäuse 2 gelangen können. Bei geöffnetem Ventil wird das in die Einströmkammer 10 strömende Wasser durch den Feinfilter 40 nicht behindert. Der Strömungswiderstand des Grobfilters 39 ist wesentlich kleiner als derjenige des Feinfilters 40, da seine Öffnungen wesentlich grösser sind.

Das Ventil 1 eignet sich insbesondere als Spülventil für eine Spülvorrichtung gemäss europäischer Patentanmeldung Nr. 09 405 215.6 des Anmelders, die für die Offenbarung beigezogen wird. Bei dieser Spülvorrichtung werden eine Teilmenge zum Reinigen eines oberen Bereichs einer Klosettschüssel und eine weitere Teilmenge zum Bewegen von Wasser, das in der Klosettschüssel im Bereich eines Siphons vorliegt, abgegeben. Diese Teilmengen können unterschiedlich gross sein und ebenfalls können die Drücke der abgegebenen Teilmengen unterschiedlich sein. Die Teilmengen können zudem zu unterschiedlichen Zeitpunkten abgegeben werden. Die mit dem erfindungsgemässen Ventil 1 bzw. 1' mögliche kurze Öffnungszeit ist hier besonders vorteilhaft. Das Ventil 1 bzw. 1' eignet sich jedoch auch für eine Spülvorrichtung, für ein WC oder ein Urinal, bei dem lediglich ein Ventil vorgesehen ist.

### Bezugszeichenliste

- 1: Ventil
- 2: Gehäuse
- 3: Erster Gehäuseteil
- 4: Zweiter Gehäuseteil
- 5: Dritter Gehäuseteil
- 6: Vierter Gehäuseteil
- 7: Einlass
- 8: Auslass
- 9: Ventilsitz
- 10: Einströmkammer
- 11: Durchlass
- 12: Membran
- 13: Wulst
- 14: Schliessteil
- 15: Steuerkammer
- 16: Pfeil
- 17: Wasserkanal
- 18: Druckregulierstopfen
- 19: Einsatz
- 20: Durchgang
- 21: Bohrung
- 22: Durchgang
- 23: Pilotöffnung
- 24: Durchgang
- 25: Ausnehmung
- 26: Stopfen
- 27: Dichtungsring
- 28: Schliessteil

- 29: Anker
- 30: Pilotventilkammer
- 31: Magnetkammer
- 32: Feder
- 33: Feder
- 34: Permanentmagnet
- 35: Halter
- 36: Membran
- 37: Anschlussstutzen
- 38: Filter
- 39: Grobfilter
- 40: Feinfilter
- 41: Vertiefung
- 42: Stutzen
- 43: Rohrteil
- 44: Hilfsventilsitz
- 45: Wulst
- 46: Öffnung
- 47: Kammer
- 48: Bohrung
- 49: Auslassöffnung
- 50: Verengung
- 51: Durchgang
- 52: Leitung
- 53: Spülkasten
- 54: Verbindungsteil
- 55: Pumpe

## Patentansprüche

1. Servogesteuertes Ventil, mit einem Gehäuse (2), das zwischen einem Einlass (7) und einem Auslass (8) einen Hauptventilsitz (9) aufweist, der durch ein erstes Schliessteil (14) verschliessbar ist, das mit einer dem Hauptventilsitz (9) abgewendeten Seite eine Wand einer Steuerkammer (15) bildet, mit einem Pilotventil (28, 44), das in einer Pilotventilkammer (30) einen Hilfsventilsitz (44) aufweist, der mit einem zweiten Schliessteil (28) verschliessbar ist, mit einem die Steuerkammer (15) mit der Pilotventilkammer (30) verbindenden Steuerwasserkanal (22) sowie einem die Steuerkammer (15) mit dem Einlass (7) verbindenden weiteren Wasserkanal (17) und mit Mitteln (34), mit denen das zweite Schliessteil (28) vom Hilfsventilsitz (44) abhebbar ist, so dass Steuerwasser aus der Steuerkammer (15) und der Pilotventilkammer (30) durch einen Durchgang (24, 51) ausfliessen kann und der Druck in der Steuerkammer (15) sinkt und sich das erste Schliessteil (14) vom Hauptventilsitz (9) abhebt, **dadurch gekennzeichnet, dass** der Durchgang (24, 51) so ausgebildet ist, dass bei geöffnetem Ventil das Steuerwasser durch diesen im Wesentlichen ohne rückwirkenden Druck ausfliessen kann.

2. Ventil nach Anspruch 1, **dadurch gekennzeichnet, dass** der Durchgang (51) zur Umgebungsatmosphäre hin offen ist.

3. Ventil nach Anspruch 2, **dadurch gekennzeichnet, dass** der Durchgang (51) mit einer Leitung (52) verbunden ist, die für den Anschluss an einen Spülbehälter (53) vorgesehen ist.

4. Ventil nach Anspruch 1, **dadurch gekennzeichnet, dass** der Durchgang (24) in den Auslass (8) mündet und dieser im Bereich einer Öffnung des Durchgangs ähnlich wie bei einem Venturirohr ausgebildet ist.

5. Verwendung eines Ventils nach einem der Ansprüche 1 bis 4 zum Spülen eines Sanitärapparates.

6. Verwendung nach Anspruch 5, **dadurch gekennzeichnet, dass** der Sanitärapparat eine WC-Anlage ist.

7. Verwendung nach Anspruch 6, **dadurch gekennzeichnet, dass** er zum Erzeugen wenigstens eines Reinigungsstrahls vorgesehen ist.

8. Spülvorrichtung zum Spülen einer Klosettschüssel, mit einem Spülbehälter (53), aus dem der Klosettschüssel mittels einer Pumpe (55) und wenigstens einem dieser in Strömungsrichtung nachgeordnetem Ventil (1, 1') gemäss einem der Ansprüche 1 bis 4 eine Spülwassermenge zuführbar ist.

9. Spülvorrichtung nach Anspruch 8, **dadurch gekennzeichnet, dass** der Durchgang (51) mit dem Spülbehälter (53) verbunden ist, so dass beim Öffnen des Ventils (1) Steuerwasser in den Spülbehälter (53) abgegeben wird.

10. Spülvorrichtung nach Anspruch 8 oder 9, **dadurch gekennzeichnet, dass** sie mehrere Ventile (1, 1') aufweist und dass die Spülwassermenge aufgeteilt wird und diese Teilmengen jeweils einem der mehreren Ventile (1, 1') zugeführt werden.
